# EUROPEAN PATENT APPLICATION

(11) **EP 4 216 663 A1**
(43) Date of publication of application: **26.07.2023**
(21) Application number: 23152414.1
(22) Date of filing: 19.01.2023
(51) Int. Cl.: H04W 76/28, H04L 12/18, H04W 4/06, H04W 88/02, H04W 88/08

(54) **METHOD AND APPARATUS FOR TRANSMITTING CSI/SRS SIGNAL INFORMATION DURING AN ACTIVE TIME OF A MULTICAST DRX**

(30) Priority: 20.01.2022 IN 202241003426; 23.12.2022 IN 202241003426
(71) Applicant: Samsung Electronics Co., Ltd., Gyeonggi-do 16677 (KR)
(72) Inventor: Shrivastava, Vinay Kumar, 560037 Bangalore (IN); Baek, Sangkyu, 16677 Suwon-si, Gyeonggi-do (KR)
(74) Representative: Gulde & Partner

(57) **Abstract**

The disclosure relates to a 5G or 6G communication system for supporting a higher data transmission rate.

Provided is a method performed by a user equipment, LTE, in a wireless communication network, the method comprising: determining that a multicast discontinuous reception, DRX, pertaining to at least one multicast service is configured in a cell; determining whether a medium access control, MAC, entity of the LTE is in an active time of the configured multicast DRX; and transmitting at least one of a channel state information, CSI, a semi-persistent CSI, a periodic sounding reference signal, SRS, and a semi-persistent SRS to a base station corresponding to the cell, in case that the MAC entity is in the active time of the configured multicast DRX.

## Description

### BACKGROUND

### 1. Field

The disclosure generally relates to wireless communication, and more particularly, to a method and a user equipment (LTE) receiving a multicast service for reporting channel state information (CSI)/sounding reference signal (SRS) signal information to a wireless communication network.

### 2. Description of Related Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is LTE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Multicast services in multicast and broadcast services (MBS) allows a new radio-radio access node (NR-RAN) (e.g., gNodeB or gNB) to share content to a group of UEs which have joined in a multicast group in a multicast coverage area, whereas broadcast services in the MBS allows the NR-RAN to share the content to all the UEs in a broadcast coverage area. The coverage area can be within a cell or can extend to an area larger than the cell.

An individual MBS traffic delivery method and a shared MBS traffic delivery method are two methods envisioned for MBS packet delivery from a view point of a fifth generation (5G) core network (CN). In the individual MBS traffic delivery method, the CN delivers separate copies of a MBS data packet to individual LTEs via per-LTE protocol data unit (PDU) sessions. In the shared MBS traffic delivery method, the CN delivers a single copy of the MBS packet to the NR-RAN, which further delivers the MBS packet to one or more UEs. The NR-RAN delivers the MBS packet to the one or more Ues using either a point-to-point delivery (PTP) or point-to-multipoint (PTM) delivery. At the UE, a MBS bearer can be composed of a common packet data conversion protocol (PDCP) entity with either the PTP, the PTM, or a combination of the PTP and the PTM legs or radio link control (RLC) entities.

For power saving and efficient scheduling, unicast reception is associated with a unicast discontinuous reception (DRX) approach. A DRX approach for reception of the MBS on the PTM and PTP paths is not defined in conventional methods, where each service of the MBS on the PTM is associated a specific DRX configuration. Hence, there is a need for DRX approach for reception of MBS services on PTM and PTP paths.

For link adaptation and/or resource allocation, and for ensuring reception performance, the LTE reports CSI (i.e., CSI feedback reporting) and/or SRS to the gNB. However, CSI/SRS reporting is limited to an active time of the unicast DRX. One potential issue is that the CSI may not be reported when the UE is not in the unicast active time. However, the UE can be engaged in receiving the one or more MBS multicast service(s) as per the active time of the DRX configuration(s) for relevant MBS multicast service(s), which drastically degrades the link adaptation and scheduling operation for the multicast reception. Thus, it is desired to provide a useful solution for CSI/SRS signal reporting by the LTE while consuming the multicast services.

### SUMMARY

The disclosure has been made to address at least the above-mentioned problems and/or disadvantages and to provide at least the advantages described below.

An aspect of the disclosure provides a method for reporting CSI/SRS signal information by a LTE receiving at least one multicast service in a wireless communication network. The method includes determining, by the UE, that a multicast DRX pertaining to the received multicast service is configured in a cell of the wireless communication network; determining, by the LTE, whether a medium access control (MAC) entity of the UE is in one of an active time or not in the active time of the configured multicast DRX; and transmitting, by the LTE when the MAC entity is in the active time of the at least one configured multicast DRX, at least one of a CSI, a semi-persistent CSI, a periodic SRS, and a semi-persistent SRS to a base station corresponding to the cell.

Another embodiment provides a UE that is configured to receive at least one multicast service in a wireless communication network for reporting at least one of CSI and SRS information. The UE includes a memory, a processor and a controller that is coupled to the memory and the processor. The controller is configured to determine that a multicast DRX pertaining to the at least one multicast service being received is configured in a cell of the wireless communication network; determine whether a MAC entity of the UE is in one of an active time or not in the active time of the configured multicast DRX; and transmit, when the MAC entity is in the active time of the at least one configured multicast DRX, at least one of a CSI, a semi-persistent CSI, a periodic SRS, and a semi-persistent SRS to a base station corresponding to the cell.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of a LTE receiving a multicast service for reporting signal information to a wireless communication network, according to an embodiment;
FIG. 2 illustrates a method for reporting signal information by the LTE, according to an embodiment;
FIG. 3 illustrates a method for reporting CSI and SRS to a base station by the LTE, according to an embodiment;
FIG. 4 illustrates determination of an effective time for the UE for reporting the signal information during a multicast DRX and a unicast DRX, according to an embodiment; and
FIGS. 5, 6 and 7 illustrate methods for reporting CSI and SRS to the base station by the LTE, according to various embodiments.

### DETAILED DESCRIPTION

Hereinafter, embodiments are described with reference to the accompanying drawings. Also, detailed descriptions of well-known functions and configurations in the art may be omitted when it is deemed that they may unnecessarily obscure the essence of the disclosure.

When embodiments are described herein, descriptions of techniques which are well known in the technical field to which the disclosure pertains and are not directly related to the disclosure will be omitted. This is to clearly convey the concept of the disclosure by omitting descriptions of unnecessary details.

In the drawings, some elements may be exaggerated, omitted, or roughly illustrated. Also, size of each element does not exactly correspond to an actual size of each element. In the drawings, elements that are the same or are in correspondence may be identified with the same or similar reference numerals.

Embodiments described herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block may be physically separated into two or more interacting and discrete blocks without departing from the scope of the disclosure. Likewise, the blocks may be physically combined into more complex blocks without departing from the scope of the disclosure.

Disclosed herein is a method for reporting signal information by a LTE that is receiving a multicast service in a wireless communication network. The method includes determining, by the UE, that a multicast DRX pertaining to the multicast service being received is configured in a cell of the wireless communication network. The LTE determines whether a MAC entity of the UE is in one of an active time or not in the active time of the configured multicast DRX. The UE transmits at least one of a CSI, a semi-persistent CSI, a periodic SRS, and a semi-persistent SRS to a base station corresponding to the cell when the MAC entity is in the active time of the at least one configured multicast DRX.

Disclosed herein is a LTE configured to receive the multicast service for reporting the signal information. The electronic device, i.e., UE, includes a multicast DRX CSI/SRS signaling controller, a memory, a processor, where the multicast DRX CSI/SRS signaling controller is coupled to the memory and the processor. The multicast DRX CSI/SRS signaling controller is configured for determining that a multicast DRX pertaining to the multicast service being received is configured in a cell of the wireless communication network. The multicast DRX CSI/SRS signaling controller is configured to determine whether a MAC entity of the UE is in one of an active time or is not in the active time of the configured multicast DRX. The multicast DRX CSI/SRS signaling controller is configured for transmitting at least one of a CSI, a semi-persistent CSI, a periodic SRS, and a semi-persistent SRS to a base station corresponding to the cell when the MAC entity is in the active time of the at least one configured multicast DRX.

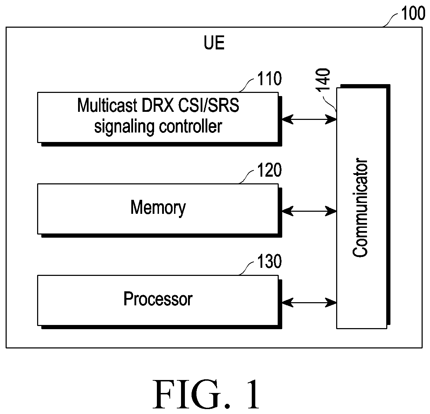

FIG. 1 is a block diagram of a LTE receiving a multicast service for reporting signal information to a wireless communication network, according to an embodiment.

In FIG. 1, a LTE 100 receives a multicast service for reporting signal information to a wireless communication network. Examples of the UE 100 include, but are not limited to a smartphone, a tablet computer, a personal digital assistant (PDA), a desktop computer, an Internet of things (IoT) device, a wearable device, etc. As shown in FIG. 1, the LTE 100 includes a multicast DRX CSI/SRS signaling controller 110, a memory 120, a processor 130, and a communicator(or transceiver) 140. The UE 100 may also include a main display, where the main display may be a physical hardware component that can be used to display to a user. Examples of the main display include, but are not limited to a light emitting diode display, a liquid crystal display, a projector, etc. The multicast DRX CSI/SRS signaling controller 110 is implemented by processing circuitry such as logic gates, integrated circuits, microprocessors, microcontrollers, memory circuits, passive electronic components, active electronic components, optical components, hardwired circuits, or the like, and may optionally be driven by a firmware. The circuits may, for example, be embodied in one or more semiconductor chips, or on substrate supports such as printed circuit boards and the like.

The multicast DRX CSI/SRS signaling controller 110 determines that a multicast DRX pertaining to the multicast service being received is configured in a cell of the wireless communication network. The multicast DRX CSI/SRS signaling controller 110 determines whether a MAC entity of the UE 100 is in one of an active time or not in the active time of the configured multicast DRX. The multicast DRX CSI/SRS signaling controller 110 transmits at least one of a CSI, a semi-persistent CSI, a periodic SRS, and a semi-persistent SRS to a base station corresponding to the cell when the MAC entity is in the active time of the at least one configured multicast DRX. In another embodiment, the multicast DRX CSI/SRS signaling controller 110 transmits the CSI configured on a physical uplink control channel (PUCCH) in a DRX group to the base station. In another embodiment, the multicast DRX CSI/SRS signaling controller 110 transmits the semi-persistent CSI configured on a physical uplink shared channel (PUSCH) in a DRX group to the base station.

In another embodiment, the multicast DRX CSI/SRS signaling controller 110 determines if downlink control information with a cyclic redundancy check scrambled by a power saving-radio network temporary identifier monitoring is configured for an active downlink bandwidth part (DL BWP). The multicast DRX CSI/SRS signaling controller 110 will also determine if a current symbol occurs within a DRX on-duration timer duration, with a DRX on-duration timer being associated with a current DRX cycle pertaining to the unicast DRX is not started. The multicast DRX CSI/SRS signaling controller 110 determines if the MAC entity is not in the active time of all the configured multicast DRXs considering at least one of a multicast assignment, a DRX command MAC CE and a long DRX command MAC CE for the multicast received from the base station until 4 milliseconds prior to the current symbol when evaluating the active time of all the configured multicast DRXs.

If the MAC entity is not in the active time of all the configured multicast DRXs considering at least one of a multicast assignment, a DRX command MAC CE and a long DRX command MAC CE for the multicast received from the base station until 4 milliseconds prior to the current symbol when evaluating the active time of all the configured multicast DRXs, then the multicast DRX CSI/SRS signaling controller 110 does not transmit the at least one of the CSI, the semi-persistent CSI, the periodic SRS, and the semi-persistent SRS to the base station corresponding to the cell. Otherwise, the multicast DRX CSI/SRS signaling controller 110 transmits the at least one of the CSI, the semi-persistent CSI, the periodic SRS, and the semi-persistent SRS to the base station corresponding to the cell.

In another embodiment, the multicast DRX CSI/SRS signaling controller 110 determines if the power saving-radio network temporary identifier monitoring is not configured for the active DL BWP. The multicast DRX CSI/SRS signaling controller 110 also determines if the MAC entity is not in the active time of all the configured multicast DRXs corresponding to the DRX group considering at least one of the multicast assignment, the DRX command MAC CE and the long DRX command MAC CE for the multicast received from the base station until 4 milliseconds prior to the current symbol when evaluating the active time of all the configured multicast DRXs corresponding to the DRX group.

If the MAC entity is not in the active time of all the configured multicast DRXs corresponding to the DRX group considering at least one of the multicast assignment, the DRX command MAC CE and the long DRX command MAC CE for the multicast received from the base station until 4 milliseconds prior to the current symbol when evaluating the active time of all the configured multicast DRXs corresponding to the DRX group, then the multicast DRX CSI/SRS signaling controller 110 does not transmit the at least one of the CSI, the semi-persistent CSI, the periodic SRS, and the semi-persistent SRS to the base station corresponding to the cell when the LTE 100 determines that the MAC entity is not in the active time of all the configured multicast DRXs corresponding to the DRX group. Alternatively, the multicast DRX CSI/SRS signaling controller 110 transmits the at least one of the CSI, the semi-persistent CSI, the periodic SRS, and the semi-persistent SRS to the base station corresponding to the cell.

In another embodiment, the multicast DRX CSI/SRS signaling controller 110 determines if a CSI masking is configured by upper layers. The multicast DRX CSI/SRS signaling controller 110 also determines if DRX on-duration timers of all the configured multicast DRXs corresponding to the DRX group are not running considering at least one of the multicast assignment, the DRX command MAC CE and the long DRX command MAC CE for the multicast received from the base station until 4 milliseconds prior to the current symbol when evaluating the active time of all the configured multicast DRXs corresponding to the DRX group.

If DRX on-duration timers of all the configured multicast DRXs corresponding to the DRX group are not running considering at least one of the multicast assignment, the DRX command MAC CE and the long DRX command MAC CE for the multicast received from the base station until 4 milliseconds prior to the current symbol when evaluating the active time of all the configured multicast DRXs corresponding to the DRX group, then the multicast DRX CSI/SRS signaling controller 110 does not transmit the at least one of the CSI, the semi-persistent CSI, the periodic SRS, and the semi-persistent SRS to the base station corresponding to the cell when the LTE (100) determines that the DRX on-duration timers of all the configured multicast DRXs corresponding to the DRX group is not running. Alternatively, the multicast DRX CSI/SRS signaling controller 110 transmits the at least one of the CSI, the semi-persistent CSI, the periodic SRS, and the semi-persistent SRS to the base station corresponding to the cell.

The memory 120 stores instructions to be executed by the processor 130. The memory 120 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 120 may, in some examples, be considered a non-transitory storage medium. The term non-transitory may indicate that the storage medium is not embodied in a carrier wave or a propagated signal. However, the term non-transitory should not be interpreted that the memory 120 is non-movable. In some examples, the memory 120 can be configured to store larger amounts of information than its storage space. In certain examples, a non-transitory storage medium may store data that can, over time, change (e.g., in random access memory (RAM) or cache). The memory 120 can be an internal storage unit or it can be an external storage unit of the UE 100, a cloud storage, or any other type of external storage.

The processor (or at least one processor) 130 is configured to execute instructions stored in the memory 120. The processor 130 may be a general-purpose processor, such as a central processing unit (CPU), an application processor (AP), or the like, a graphics-only processing unit such as a graphics processing unit (GPU), a visual processing unit (VPU) and the like. The processor 130 may include multiple cores to execute the instructions. The communicator 140 is configured for communicating internally between hardware components in the UE 100. Further, the communicator 140 is configured to facilitate communication between the LTE 100 and other devices via one or more networks (e.g., radio technology). The communicator 140 includes an electronic circuit specific to a standard that enables wired or wireless communication. The processor may control the memory, the communicator, and the multicast DRX CSI/SRS signaling controller to operate embodiments according to this disclosure

Although FIG. 1 shows the hardware components of the LTE 100, FIG. 1 does not limit the present disclosure. In other embodiments, the LTE 100 may include a fewer or greater number of components, with the labels or names of the components that are used herein being only for illustrative purposes, without limiting the scope of the embodiments. One or more components can be combined together to perform same or substantially similar function for reporting the signal information to the wireless network.

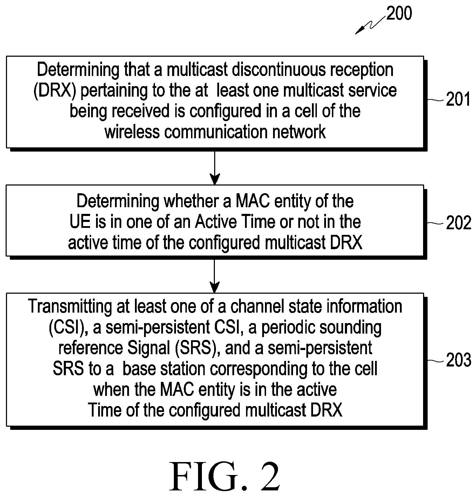

FIG. 2 illustrates a method for reporting signal information by the LTE, according to an embodiment.

The flow diagram 200 of FIG. 2 illustrates a method for reporting the CSI and/or SRS signal information by the LTE 100 receiving the at least one multicast service in the wireless communication network. In the method, the multicast DRX CSI/SRS signaling controller 110 performs steps 201 to 203 of the flow diagram 200. At step 201, the method determines if the multicast DRX pertaining to the multicast service being received is configured in the cell of the wireless communication network. At step 202, the method determines if the MAC entity of the UE 100 is in one of the active time or is not in the active time of the configured multicast DRX. At step 203, the method transmits at least one of the CSI, the semi-persistent CSI, the periodic SRS, and the semi-persistent SRS to the base station corresponding to the cell when the MAC entity is in the active time of the at least one configured multicast DRX.

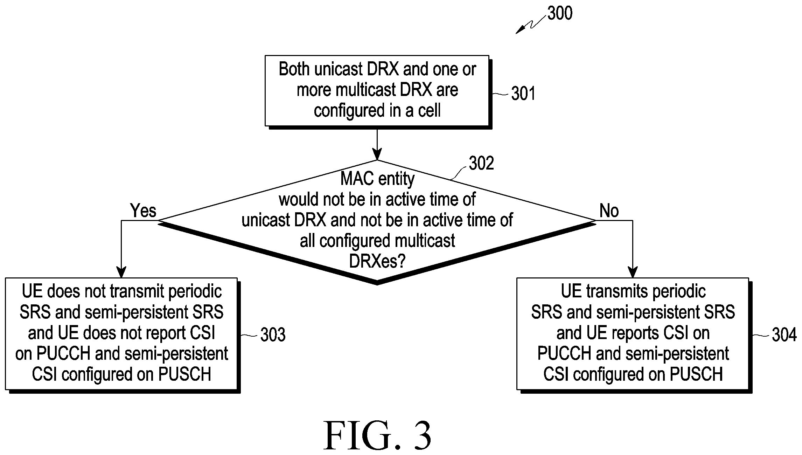

FIG. 3 illustrates a method for reporting CSI and SRS to a base station by the UE, according to an embodiment. The flow diagram 300 of FIG. 3 illustrates a method for reporting the CSI and/or the SRS to the base station by the UE 100. The flow diagram 300 includes steps 301 to 304. At step 301, the LTE 100 detects that both the unicast DRX and the one or more multicast DRX are configured in the cell to which the UE 100 is connected and receiving the at least one multicast service. At step 302, the LTE 100 determines whether the MAC entity would not be in the active time of the unicast DRX and not be in the active time of all configured multicast DRXs. At step 303, the LTE 100 does not transmit the periodic SRS and the semi-persistent SRS, and does not report the CSI on the PUCCH and the semi-persistent CSI configured on the PUSCH when the MAC entity would not be in the active time of the unicast DRX and not be in the active time of all the configured multicast DRXs.

Alternatively, at step 304 of FIG. 3, the UE 100 transmits the periodic SRS and the semi-persistent SRS, and reports the CSI on the PUCCH and the semi-persistent CSI configured on the PUSCH when the MAC entity is in the active time of the unicast DRX and/or the active time of at least one of configured multicast DRX. The CSI reporting includes at least one of CSI measurements over the configured measurement resources or reference signals, composing of the CSI results for CSI report /CSI feedback and reporting of the CSI feedback to the network over the uplink transmission channel (e.g., PUCCH or PUSCH).

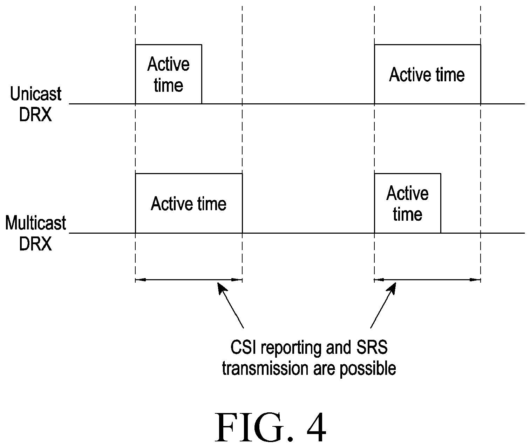

FIG. 4 illustrates determination of an effective time for the UE for reporting the signal information during a multicast DRX and a unicast DRX, according to an embodiment.

As shown in FIG. 4, the UE 100 operates for CSI reporting and SRS transmission during the active time of the at least one of the multicast DRX or the unicast DRX.

If the power saving-radio network temporary identifier monitoring is configured for the active DL BWP, and the current symbol occurs within the DRX on-duration timer duration, where the DRX on-duration timer associated with the current DRX cycle pertaining to the unicast DRX is not started, and if the MAC entity is not in the active time of all the configured multicast DRXs considering at least one of the multicast assignment, the DRX command MAC CE and the long DRX command MAC CE for multicast received from the base station until 4 milliseconds prior to the current symbol when evaluating the active time of all the configured multicast DRXs, the LTE 100 does not transmit the at least one of the CSI, the semi-persistent CSI, the periodic SRS, and the semi-persistent SRS to the base station corresponding to the cell, when the LTE 100 determines that the MAC entity of the UE 100 is not in the active time of all the configured multicast DRXs. Otherwise, the LTE 100 transmits the at least one of the CSI, the semi-persistent CSI, the periodic SRS, and the semi-persistent SRS to the base station corresponding to the cell. Alternatively, the UE 100 considers only the transmission or the lack of transmission of the semi-persistent CSI configured on the PUSCH, the periodic SRS, and the semi-persistent SRS in the case of the power saving-radio network temporary identifier monitoring having been configured. If the power saving-radio network temporary identifier monitoring is not configured for the active DL BWP, and if the MAC entity is not in the active time of all the configured multicast DRXs corresponding to the DRX group considering at least one of the multicast assignment, the DRX command MAC CE and the long DRX command MAC CE for multicast is received from the base station until 4 milliseconds prior to the current symbol when evaluating the active time of all the configured multicast DRXs corresponding to the DRX group, the LTE 100 transmits the at least one of the CSI, the semi-persistent CSI, the periodic SRS, and the semi-persistent SRS to the base station corresponding to the cell when the UE determines that the MAC entity of the UE 100 is not in the active time of all the configured multicast DRXs corresponding to the DRX group. Otherwise, the LTE 100 transmits the at least one of the CSI, the semi-persistent CSI, the periodic SRS, and the semi-persistent SRS to the base station corresponding to the cell.

If the CSI masking is configured by upper layers, and if the DRX on-duration timers of all the configured multicast DRXs corresponding to the DRX group is not running considering at least one of the multicast assignment, the DRX command MAC CE and the long DRX command MAC CE for multicast received from the base station until 4 milliseconds prior to the current symbol when evaluating the active time of all the configured multicast DRXs corresponding to the DRX group, the LTE 100 does not transmit the at least one of the CSI, the semi-persistent CSI, the periodic SRS, and the semi-persistent SRS to the base station corresponding to the cell, when the LTE 100 determines that the DRX on-duration timers of all the configured multicast DRXs corresponding to the DRX group are not running.

Otherwise, the LTE 100 transmits the at least one of the CSI, the semi-persistent CSI, the periodic SRS, and the semi-persistent SRS to the base station corresponding to the cell. Alternatively, the LTE 100 considers only the transmission or lack of transmission of the CSI on the PUCCH in the case of the CSI masking setup by the upper layers.

The evaluation of the active time for the multicast DRX includes determining the MAC entity of the UE 100 is in the active time when at least one of the DRX on-duration timer, the DRX inactivity timer and the DRX retransmission timer for the configured multicast DRX of at least one the multicast service is running. These timers are also referred to as drx-onDurationTimerPTM or drx-InactivityTimerPTM or drx-RetransmissionTimerDL-PTM, respectively for the configured multicast service addressed by a radio network temporary identifier (G-RNTI or G-CS-RNTI). The drx-onDurationTimerPTM timer is started periodically in the DRX cycle. The drx-InactivityTimerPTM is started or restarted on reception of a new multicast transmission indicated in Physical Downlink Control Channel (PDCCH). Upon reception of configured multicast assignment or the PDCCH indicating a DL multicast transmission, the drx-HARQ-RTT-TimerDL-PTM timer is started. Upon expiration of the drx-HARQ-RTT-TimerDL-PTM timer, the drx-RetransmissionTimerDL-PTM is started. Upon reception of the DRX command MAC CE for the multicast (i.e., addressed to G-RNTI), the drx-onDurationTimerPTM timer and the drx-InactivityTimerPTM timer are stopped.

The evaluation of the active time for the multicast DRX includes determining that the MAC entity of the UE 100 is not in the active time when none of the DRX on-duration timer, the DRX inactivity timer and the DRX retransmission timer for all the configured multicast DRXs of all multicast services is running.

Regardless of the multicast DRX being in the active time or not being in the active time, the LTE 100 transmits hybrid automatic repeat request (HARQ) feedback, aperiodic CSI on the PUSCH and aperiodic SRS on the serving cells in the DRX group when such is expected.

An example 3GPP specification is described below for the CSI/SRS reporting operation for the LTE 100, when the LTE 100 is configured with a unicast DRX configuration or the MBS (or multicast) DRX configuration or both of the unicast DRX configuration and the MBS (or multicast) DRX configuration. Further, there may be more than one MBS services and pertinent DRX configurations also applicable.

DRX: The MAC entity is configured by a radio resource control (RRC) with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity monitors the PDCCH according to requirements found in other clauses of the 3GPP specification. When in RRC_CONNECTED state, if the DRX is configured for the UE 100, then the MAC entity monitors the PDCCH discontinuously using the DRX operation specified in this clause for all activated serving cells, otherwise the MAC entity monitors the PDCCH as specified in 3GPP Technical Specification (TS) 38.213. The RRC controls the DRX operation by configuring the following parameters:
- drx-onDurationTimer: a duration at a beginning of a DRX cycle;
- drx-SlotOffset: a delay before starting the drx-onDurationTimer;
- drx-InactivityTimer: a duration after the PDCCH occasion in which a PDCCH indicates a new UL or DL transmission for the MAC entity;
- drx-RetransmissionTimerDL (per DL HARQ process except for the broadcast process): a maximum duration until a DL retransmission is received;
- drx-RetransmissionTimerUL (per UL HARQ process): a maximum duration until a grant for Uplink (UL) retransmission is received;
- drx-LongCycleStartOffset: a long DRX cycle and drx-StartOffset which defines the subframe where the Long and a Short DRX cycle starts;
- drx-ShortCycle (optional): the Short DRX cycle;
- drx-ShortCycleTimer (optional): a duration the LTE 100 shall follow the Short DRX cycle;
- drx-HARQ-RTT-TimerDL (per DL HARQ process except for the broadcast process): a minimum duration before a DL assignment for HARQ retransmission is expected by the MAC entity;
- drx-HARQ-RTT-TimerUL (per UL HARQ process): a minimum duration before a UL HARQ retransmission grant is expected by the MAC entity;
- ps-Wakeup (optional): a configuration to start the associated drx-onDurationTimer in case the power saving-radio network temporary identifier is monitored but not detected;
- ps-TransmitOtherPeriodicCSI (optional): a configuration to report the periodic CSI that is not L1-RSRP on the PUCCH during the time duration indicated by drx-onDurationTimer in case the power saving-radio network temporary identifier is configured but the associated drx-onDurationTimer is not started;
- ps-TransmitPeriodicL1-RSRP (optional): a configuration to transmit the periodic CSI that is L1-RSRP on the PUCCH during the time duration indicated by drx-onDurationTimer in case the power saving-radio network temporary identifier is configured but the associated drx-onDurationTimer is not started.

Serving cells of the MAC entity may be configured by the RRC in two DRX groups with separate DRX parameters. When the RRC does not configure the secondary DRX group, there is only one DRX group and all the serving cells belong to that the one DRX group. When the two DRX groups are configured, then each serving cell is uniquely assigned to either of the two groups. The DRX parameters that are separately configured for each DRX group are: drx-onDurationTimer, drx-InactivityTimer. The DRX parameters that are common to the DRX groups are: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

When the DRX is configured by the network (e.g., a base station), then the active time for the serving cells in the DRX group includes the time while:
- the drx-onDurationTimer or the drx-InactivityTimer configured for the DRX group is running; or
- the drx-RetransmissionTimerDL or the drx-RetransmissionTimerUL is running on any serving cell in the DRX group; or
- the ra-ContentionResolutionTimer (as described in clause 5.1.5) or the msgB-ResponseWindow (as described in clause 5.1.4a) is running; or
- a scheduling request is sent on the PUCCH and is pending (as described in clause 5.4.4); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When the DRX is configured, then the MAC entity starts the drx-HARQ-RTT-TimerDL for the corresponding HARQ process in the first symbol after the end of the corresponding transmission carrying the DL HARQ feedback and stops the drx-RetransmissionTimerDL for the corresponding HARQ process if a MAC PDU is received in a configured downlink assignment.

When the DRX is configured, then the MAC entity starts the drx-HARQ-RTT-TimerUL for the corresponding HARQ process in the first symbol after the end of the first transmission (within a bundle) of the corresponding PUSCH transmission, and stops the drx-RetransmissionTimerLTL for the corresponding HARQ process at the first transmission (within a bundle) of the corresponding PUSCH transmission if the MAC PDU is transmitted in a configured uplink grant and LBT failure indication is not received from lower layers.

When the DRX is configured, then the MAC entity starts the drx-RetransmissionTimerDL for the corresponding HARQ process in the first symbol after the expiration of drx-HARQ-RTT-TimerDL if the drx-HARQ-RTT-TimerDL expires, and if the data of the corresponding HARQ process was not successfully decoded.

When the DRX is configured, then the MAC entity starts the drx-RetransmissionTimerUL for the corresponding HARQ process in the first symbol after the expiration of drx-HARQ-RTT-TimerUL if the drx-HARQ-RTT-TimerUL expires.

When the DRX is configured, then the MAC entity stops the drx-onDurationTimer for each DRX group, and stops the drx-InactivityTimer for each DRX group if a DRX Command MAC CE or a Long DRX Command MAC CE is received.

When the DRX is configured, if the drx-InactivityTimer for the DRX group expires, and if the short DRX cycle is configured, then the MAC entity starts or restarts the drx-ShortCycleTimer for this DRX group in the first symbol after the expiration of drx-Inactivity Timer, and uses the short DRX cycle for this DRX group. Otherwise, the MAC entity uses the long DRX cycle for this DRX group.

When the DRX is configured, if a DRX Command MAC CE is received, and if the Short DRX cycle is configured, then the MAC entity starts or restarts the drx-ShortCycleTimer for each DRX group in the first symbol after the end of the DRX Command MAC CE reception, and uses the short DRX cycle for each DRX group. Otherwise, the MAC entity uses the long DRX cycle for each DRX group.

When the DRX is configured, then the MAC entity uses the long DRX cycle for this DRX group, if the drx-ShortCycleTimer for the DRX group expires.

When the DRX is configured, then the MAC entity stops the drx-ShortCycleTimer for each DRX group, and uses the long DRX cycle for each DRX group if the long DRX command MAC CE is received.

When the DRX is configured, then the MAC entity starts the drx-onDurationTimer for this DRX group after drx-SlotOffset from the beginning of the subframe if the short DRX cycle is used for a DRX group, and [(SFN × 10) + subframe number] modulo (drx-ShortCycle) = (drx-StartOffset) modulo (drx-ShortCycle.

When the DRX is configured, then the MAC entity starts the drx-onDurationTimer after the drx-SlotOffset from the beginning of the subframe, if the Long DRX cycle is used for a DRX group, and [(SFN × 10) + subframe number] modulo (drx-LongCycle) = drx-StartOffset, if power saving-radio network temporary identifier monitoring is configured for the active DL BWP, as specified in TS 38.213, clause 10.3, if power saving-radio network temporary identifier indication associated with the current DRX cycle received from lower layer indicated to start drx-onDurationTimer, as specified in TS 38.213; or if all power saving-radio network temporary identifier occasion(s) in time domain, as specified in TS 38.213, associated with the current DRX cycle occurred in active time considering grants/assignments/DRX Command MAC CE/Long DRX Command MAC CE received and Scheduling Request sent until 4 milliseconds prior to start of the last power saving-radio network temporary identifier occasion, or during a measurement gap, or when the MAC entity monitors for a PDCCH transmission on the search space indicated by recoverySearchSpaceId of the SpCell identified by the C-RNTI while the ra-ResponseWindow is running (as specified in clause 5.1.4); or if ps-Wakeup is configured with value true and power saving-radio network temporary identifier indication associated with the current DRX cycle has not been received from lower layers. Otherwise, the MAC entity starts the drx-onDurationTimer for this DRX group after drx-SlotOffset from the beginning of the subframe. In case of unaligned SFN across carriers in a cell group, the SFN of the SpCell is used to calculate the DRX duration.

When the DRX is configured, then the MAC entity monitors the PDCCH on the serving cells in this DRX group as specified in TS 38.213, if the DRX group is in active time.

When the DRX is configured, then the MAC entity starts the drx-HARQ-RTT-TimerDL for the corresponding HARQ process in the first symbol after the end of the corresponding transmission carrying the DL HARQ feedback, and stops the drx-RetransmissionTimerDL for the corresponding HARQ process if the PDCCH indicates a DL transmission. When HARQ feedback is postponed by PDSCH-to-HARQ_feedback timing indicating a non-numerical k1 value, as specified in TS 38.213 where the PDSCH is a physical downlink shared channel , the corresponding transmission opportunity to send the DL HARQ feedback is indicated in a later PDCCH requesting the HARQ-ACK feedback.

When the DRX is configured, then the MAC entity starts the drx-RetransmissionTimerDL in the first symbol after the PDSCH transmission for the corresponding HARQ process if the PDSCH-to-HARQ_feedback timing indicates a non-numerical k1 value, as specified in TS 38.213.

When the DRX is configured, then the MAC entity starts the drx-HARQ-RTT-TimerUL for the corresponding HARQ process in the first symbol after the end of the first transmission (within a bundle) of the corresponding PUSCH transmission, and stops the drx-RetransmissionTimerLTL for the corresponding HARQ process if the PDCCH indicates a UL transmission.

When the DRX is configured, then the MAC entity starts or restarts the drx-InactivityTimer for this DRX group in the first symbol after the end of the PDCCH reception if the PDCCH indicates a new transmission (DL or UL) on the serving cell in this DRX group. A PDCCH indicating activation of SPS or configured grant type 2 is considered to indicate a new transmission.

When the DRX is configured, then the MAC entity stops the drx-RetransmissionTimerUL for the corresponding HARQ process if the HARQ process receives downlink feedback information and acknowledgement is indicated.

When the DRX is configured, then the MAC entity does not transmit the periodic SRS and the semi-persistent SRS defined in TS 38.214, and does not report the semi-persistent CSI configured on the PUSCH, if the power saving-radio network temporary identifier monitoring is configured for the active DL BWP as specified in TS 38.213, clause 10.3, if the current symbol n occurs within the drx-onDurationTimer duration, if the drx-onDurationTimer associated with the current DRX cycle is not started as specified in this clause, if the MAC entity would not be in the active time considering grants/assignments/DRX Command MAC CE/Long DRX Command MAC CE received and Scheduling Request sent until 4 milliseconds prior to symbol n when evaluating all DRX active time conditions as specified in this clause; and if all multicast DRXs would not be in the active time considering multicast assignments/DRX Command MAC CE/Long DRX Command MAC CE received until 4 milliseconds prior to the symbol n when evaluating all the DRX active time conditions as specified in the clause 5.7b and all multicast sessions are configured with multicast DRX.

When the DRX is configured, then the MAC entity does not report the periodic CSI that is L1-RSRP on the PUCCH, if ps-TransmitPeriodicL1-RSRP is not configured with value true.

When the DRX is configured, if the ps-TransmitOtherPeriodicCSI is not configured with value true, then the MAC entity does not report the periodic CSI that is not L1-RSRP on the PUCCH.

When the power saving-radio network temporary identifier is not configured, then the MAC entity does not transmit the periodic SRS and the semi-persistent SRS defined in TS 38.214 in this DRX group, and does not report the CSI on the PUCCH and the semi-persistent CSI configured on the PUSCH in this DRX group if in current symbol n, if a DRX group would not be in the active time considering grants/assignments scheduled on serving cell(s) in this DRX group and DRX command MAC CE/Long DRX Command MAC CE received and the scheduling request sent until 4 milliseconds prior to symbol n when evaluating all DRX active time conditions as specified in this clause, and in current symbol n, all the multicast DRXs corresponding to the DRX group would not be in the active time considering grants/assignments/DRX command MAC CE/Long DRX command MAC CE received until 4 milliseconds prior to the symbol n when evaluating all DRX active time conditions as specified in the clause 5.7b and all multicast sessions corresponding to the DRX group are configured with multicast DRX.

When the DRX is configured, then the MAC entity does not report the CSI on the PUCCH in this DRX group, if the CSI masking (csi-Mask) is set up by upper layers, and in current symbol n, if drx-onDurationTimer of a DRX group would not be running considering grants/assignments scheduled on serving cell(s) in this DRX group and DRX Command MAC CE/Long DRX Command MAC CE received until 4 ms prior to symbol n when evaluating all DRX active time conditions as specified in this clause, and in current symbol n, if drx-onDurationTimerPTM(s) of all multicast DRXs corresponding to the DRX group would not be running considering DRX Command MAC CE/Long DRX Command MAC CE received until 4 ms prior to symbol n when evaluating all DRX active time conditions as specified in clause 5.7b and all multicast sessions corresponding to the DRX group are configured with multicast DRX.

If the LTE 100 multiplexes the CSI configured on the PUCCH with other overlapping UCI(s) according to the procedure specified in TS 38.213 clause 9.2.5 and this CSI multiplexed with other UCI(s) would be reported on the PUCCH resource either outside the DRX active time of the DRX group in which this PUCCH is configured or outside the on-duration period of the DRX group in which this PUCCH is configured if the CSI masking is setup by the upper layers, it is up to LTE implementation whether to report this CSI multiplexed with other UCI(s).

Regardless of whether the MAC entity is monitoring the PDCCH or not on the serving cells in the DRX group, the MAC entity transmits the HARQ feedback, the aperiodic CSI on the PUSCH, and the aperiodic SRS defined in TS 38.214 on the serving cells in the DRX group when such is expected. The MAC entity needs not to monitor the PDCCH if it is not the complete PDCCH occasion (e.g., the active time starts or ends in the middle of a PDCCH occasion).

The example specification describes the CSI reporting operation for the LTE 100 when it is configured or setup with the CSI masking by the upper layers and when the LTE 100 is configured for the unicast DRX configuration or the MBS (or multicast) DRX configuration, or both of the unicast DRX configuration and the MBS (or multicast) DRX configuration. Further, there may be more than one MBS service and the pertinent DRX configurations also applicable.

DRX: in current symbol n, the MAC entity does not report the CSI on the PUCCH in this DRX group if the drx-onDurationTimer of the DRX group would not be running considering grants/assignments scheduled on the serving cell(s) in this DRX group and the DRX Command MAC CE/Long DRX Command MAC CE received until 4 milliseconds prior to symbol n when evaluating all the DRX active time conditions as specified in this clause; and if CSI masking (csi-Mask) is setup by upper layers, and if the MAC entity would not be in all Multicast DRXs active time considering grants/assignments/DRX command MAC CE/Long DRX command MAC CE received until 4 milliseconds prior to symbol n when evaluating all DRX active time conditions as specified in clause 5.7b and all multicast sessions corresponding to the DRX group are configured with multicast DRX.

The multicast DRX CSI/SRS signaling controller 110 performs operation of the MAC entity disclosed herein.

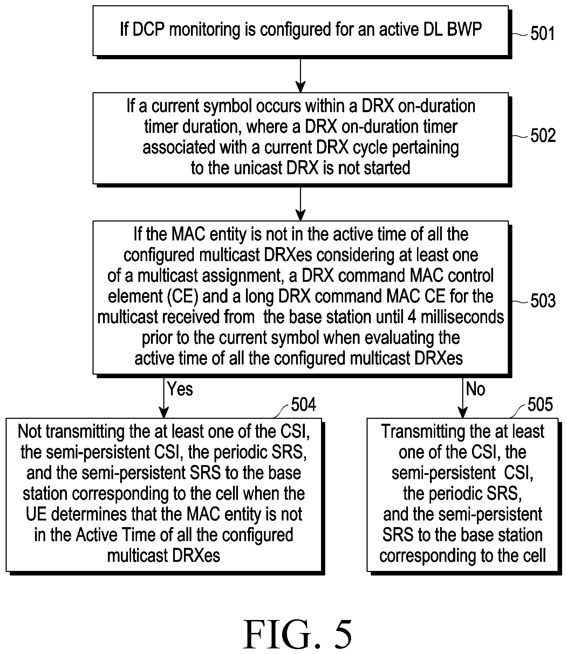

FIGS. 5, 6 and 7 illustrate methods a method for reporting CSI and SRS to the base station by the LTE, according to embodiments.

As shown in step 501 of FIG. 5, the LTE 100 determines if power saving-radio network temporary identifier monitoring is configured for the active DL BWP. At step 502, the LTE 100 determines if the current symbol occurs within the DRX on-duration timer duration, where the DRX on-duration timer associated with the current DRX cycle pertaining to the unicast DRX is not started. At step 503, the LTE 100 determines if the MAC entity is not in the active time of all the configured multicast DRXs considering at least one of the multicast assignment, the DRX command MAC CE and the long DRX command MAC CE for the multicast received from the base station until 4 milliseconds prior to the current symbol when evaluating the active time of all the configured multicast DRXs. At step 504, in case that the LTE 100 determines that the MAC entity is not in the active time of all the configured multicast DRXs, the LTE 100 does not transmit the at least one of the CSI, the semi-persistent CSI, the periodic SRS, and the semi-persistent SRS to the base station corresponding to the cell. Otherwise, in step 505 the LTE 100 transmits the at least one of the CSI, the semi-persistent CSI, the periodic SRS, and the semi-persistent SRS to the base station corresponding to the cell.

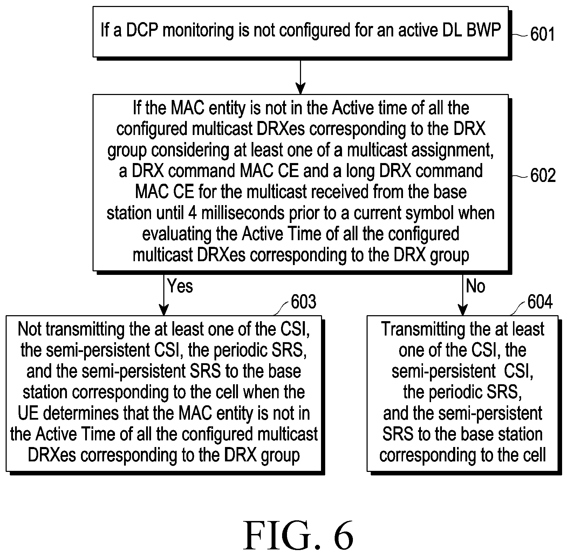

As shown in step 601 of FIG. 6, the UE 100 determines if the power saving-radio network temporary identifier monitoring is not configured for the active DL BWP. At step 602, the LTE 100 determines if the MAC entity is not in the active time of all the configured multicast DRXs corresponding to the DRX group considering at least one of the multicast assignment, the DRX command MAC CE and the long DRX command MAC CE for the multicast received from the base station until 4 milliseconds prior to the current symbol when evaluating the active time of all the configured multicast DRXs corresponding to the DRX group. In step 603, the LTE 100 does not transmit the at least one of the CSI, the semi-persistent CSI, the periodic SRS, and the semi-persistent SRS to the base station corresponding to the cell when the UE 100 determines that the MAC entity is not in the active time of all the configured multicast DRXs corresponding to the DRX group. Otherwise, at step 604 the LTE 100 transmits the at least one of the CSI, the semi-persistent CSI, the periodic SRS, and the semi-persistent SRS to the base station corresponding to the cell.

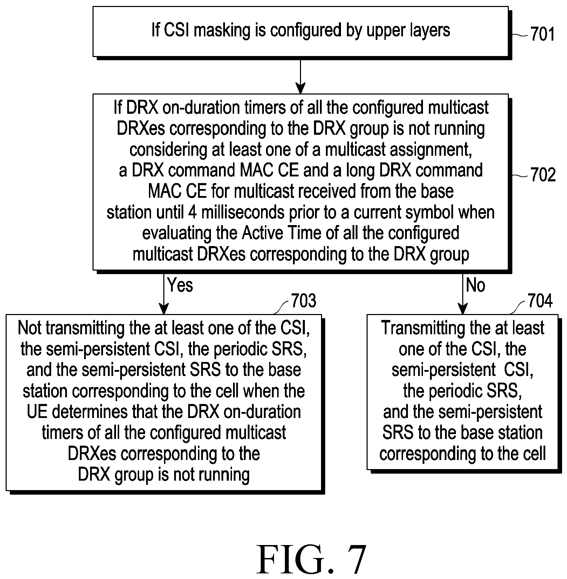

As shown in step 701 of FIG. 7, the UE 100 determines if the CSI masking is configured by the upper layers. At step 702, the UE 100 determines if the DRX on-duration timers of all the configured multicast DRXs corresponding to the DRX group is not running considering at least one of the multicast assignment, the DRX command MAC CE and the long DRX command MAC CE for the multicast received from the base station until 4 milliseconds prior to a current symbol when evaluating the active time of all the configured multicast DRXs corresponding to the DRX group. In step 703, the UE 100 does not transmit the at least one of the CSI, the semi-persistent CSI, the periodic SRS, and the semi-persistent SRS to the base station corresponding to the cell when the LTE 100 determines that the DRX on-duration timers of all the configured multicast DRXs corresponding to the DRX group is not running. Otherwise, at step 704 the LTE 100 transmits the at least one of the CSI, the semi-persistent CSI, the periodic SRS, and the semi-persistent SRS to the base station corresponding to the cell.

In an embodiment of this disclosure, a method for reporting at least one of Channel State Information (CSI) and Sounding Reference Signal (SRS) signal information by a User Equipment (LTE) (100) receiving at least one multicast service in a wireless communication network, comprises: determining, by the LTE (100), that a multicast Discontinuous Reception (DRX) pertaining to the at least one multicast service being received is configured in a cell of the wireless communication network; determining, by the LTE (100), whether a Medium Access Control (MAC) entity of the UE (100) is in one of an Active Time or not in the Active Time of the configured multicast DRX; and transmitting, by the LTE (100), at least one of a CSI, a semi-persistent CSI, a periodic SRS, and a semi-persistent SRS to a base station corresponding to the cell when the MAC entity is in the Active Time of the at least one configured multicast DRX.

In addition, the method comprises determining by the LTE (100) if: a Downlink control information with Cyclic redundancy check scrambled by Power saving-radio network temporary identifier (DCP) monitoring is configured for an active Downlink Bandwidth Part (DL BWP); a current symbol occurs within a DRX on-duration timer duration, wherein a DRX on-duration timer associated with a current DRX cycle pertaining to the unicast DRX is not started; and if the MAC entity is not in the Active Time of all the configured multicast DRXes considering at least one of a multicast assignment, a DRX command MAC Control Element (CE) and a long DRX command MAC CE for the multicast received from the base station until 4 milliseconds prior to the current symbol when evaluating the Active Time of all the configured multicast DRXes, then not transmitting by the LTE (100), the at least one of the CSI, the semi-persistent CSI, the periodic SRS, and the semi-persistent SRS to the base station corresponding to the cell when the LTE (100) determines that the MAC entity is not in the Active Time of all the configured multicast DRXes; else, transmitting by the LTE (100), the at least one of the CSI, the semi-persistent CSI, the periodic SRS, and the semi-persistent SRS to the base station corresponding to the cell.

In addition, the method comprises determining by the LTE (100) if: a DCP monitoring is not configured for an active DL BWP; and if the MAC entity is not in the Active Time of all the configured multicast DRXes corresponding to the DRX group considering at least one of a multicast assignment, a DRX command MAC CE and a long DRX command MAC CE for the multicast received from the base station until 4 milliseconds prior to a current symbol when evaluating the Active Time of all the configured multicast DRXes corresponding to the DRX group, then not transmitting by the LTE (100), the at least one of the CSI, the semi-persistent CSI, the periodic SRS, and the semi-persistent SRS to the base station corresponding to the cell when the LTE (100) determines that the MAC entity is not in the Active Time of all the configured multicast DRXes corresponding to the DRX group; else, transmitting by the LTE (100), the at least one of the CSI, the semi-persistent CSI, the periodic SRS, and the semi-persistent SRS to the base station corresponding to the cell.

In addition, the method comprises determining by the LTE (100) if: a CSI masking is configured by upper layers; and if DRX on-duration timers of all the configured multicast DRXes corresponding to the DRX group is not running considering at least one of a multicast assignment, a DRX command MAC CE and a long DRX command MAC CE for multicast received from the base station until 4 milliseconds prior to a current symbol when evaluating the Active Time of all the configured multicast DRXes corresponding to the DRX group, then not transmitting by the UE (100), the at least one of the CSI, the semi-persistent CSI, the periodic SRS, and the semi-persistent SRS to the base station corresponding to the cell when the LTE (100) determines that the DRX on-duration timers of all the configured multicast DRXes corresponding to the DRX group is not running; else, transmitting by the UE (100), the at least one of the CSI, the semi-persistent CSI, the periodic SRS, and the semi-persistent SRS to the base station corresponding to the cell.

In addition, wherein transmitting, by the UE (100), the CSI to the base station, comprises: transmitting, by the LTE (100), the CSI configured on a Physical Uplink Control Channel (PUCCH) in a DRX group to the base station.

In addition, wherein transmitting, by the UE (100), the semi-persistent CSI to the base station, comprises: transmitting, by the LTE (100), the semi-persistent CSI configured on a Physical Uplink Shared Channel (PUSCH) in a DRX group to the base station.

In an another embodiment of this disclosure, A User Equipment (UE) (100) receiving at least one multicast service in a wireless communication network for reporting at least one of Channel State Information (CSI) and Sounding Reference Signal (SRS) signal information, comprises: a memory (120); a processor (130); and a multicast Discontinuous Reception (DRX) CSI/SRS signaling controller (110), coupled to the memory (120) and the processor (130), configured for: determining that a multicast Discontinuous Reception (DRX) pertaining to the at least one multicast service being received is configured in a cell of the wireless communication network, determining whether a Medium Access Control (MAC) entity of the LTE (100) is in one of an Active Time or not in the Active Time of the configured multicast DRX, and transmitting at least one of a Channel State Information (CSI), a semi-persistent CSI, a periodic Sounding Reference Signal (SRS), and a semi-persistent SRS to a base station corresponding to the cell when the MAC entity is in the Active Time of the at least one configured multicast DRX.

In addition, the UE is configured for determining if: a Downlink control information with Cyclic redundancy check scrambled by Power saving-radio network temporary identifier (DCP) monitoring is configured for an active Downlink Bandwidth Part (DL BWP); a current symbol occurs within a DRX on-duration timer duration, wherein a DRX on-duration timer associated with a current DRX cycle pertaining to the unicast DRX is not started; and if the MAC entity is not in the Active Time of all the configured multicast DRXes considering at least one of a multicast assignment, a DRX command MAC Control Element (CE) and a long DRX command MAC CE for the multicast received from the base station until 4 milliseconds prior to the current symbol when evaluating the Active Time of all the configured multicast DRXes, then not transmitting the at least one of the CSI, the semi-persistent CSI, the periodic SRS, and the semi-persistent SRS to the base station corresponding to the cell when the LTE (100) determines that the MAC entity is not in the Active Time of all the configured multicast DRXes; else, transmitting the at least one of the CSI, the semi-persistent CSI, the periodic SRS, and the semi-persistent SRS to the base station corresponding to the cell.

In addition, the UE is configured for determining if: a DCP monitoring is not configured for an active DL BWP; and if the MAC entity is not in the Active Time of all the configured multicast DRXes corresponding to the DRX group considering at least one of a multicast assignment, a DRX command MAC CE and a long DRX command MAC CE for the multicast received from the base station until 4 milliseconds prior to a current symbol when evaluating the Active Time of all the configured multicast DRXes corresponding to the DRX group, then not transmitting the at least one of the CSI, the semi-persistent CSI, the periodic SRS, and the semi-persistent SRS to the base station corresponding to the cell when the LTE (100) determines that the MAC entity is not in the Active Time of all the configured multicast DRXes corresponding to the DRX group; else, transmitting the at least one of the CSI, the semi-persistent CSI, the periodic SRS, and the semi-persistent SRS to the base station corresponding to the cell.

In addition, the UE is configured for determining if: a CSI masking is configured by upper layers; and if DRX on-duration timers of all the configured multicast DRXes corresponding to the DRX group is not running considering at least one of a multicast assignment, a DRX command MAC CE and a long DRX command MAC CE for multicast received from the base station until 4 milliseconds prior to a current symbol when evaluating the Active Time of all the configured multicast DRXes corresponding to the DRX group, then not transmitting the at least one of the CSI, the semi-persistent CSI, the periodic SRS, and the semi-persistent SRS to the base station corresponding to the cell when the LTE (100) determines that the DRX on-duration timers of all the configured multicast DRXes corresponding to the DRX group is not running; else, transmitting the at least one of the CSI, the semi-persistent CSI, the periodic SRS, and the semi-persistent SRS to the base station corresponding to the cell.

In addition, wherein transmitting the CSI to the base station, comprises: transmitting the CSI configured on a Physical Uplink Control Channel (PUCCH) in a DRX group to the base station. In addition, wherein transmitting the semi-persistent CSI to the base station, comprises: transmitting the semi-persistent CSI configured on a Physical Uplink Shared Channel (PUSCH) in a DRX group to the base station.

In an another embodiment of this disclosure, A method performed by a user equipment (UE) in a wireless communication network, the method comprising: determining that a multicast discontinuous reception (DRX) pertaining to at least one multicast service is configured in a cell; determining whether a medium access control (MAC) entity of the UE is in an active time of the configured multicast DRX; and transmitting at least one of a channel state information (CSI), a semi-persistent CSI, a periodic sounding reference signal (SRS), and a semi-persistent SRS to a base station corresponding to the cell, in case that the MAC entity is in the active time of the configured multicast DRX.

In addition, the method comprises determining in case that downlink control information with a cyclic redundancy check scrambled by a power saving-radio network temporary identifier monitoring is configured for an active downlink bandwidth part; determining in case that a current symbol occurs within a DRX on-duration timer duration, wherein a DRX on-duration timer associated with a current DRX cycle pertaining to the unicast DRX is not started; and determining, in case that the MAC entity is not in the active time of all the configured multicast DRXs considering at least one of a multicast assignment, a DRX command MAC control element (CE) and a long DRX command MAC CE for the multicast received from the base station until 4 milliseconds prior to the current symbol in case that evaluating the active time of all the configured multicast DRXs, wherein, in response to determining that the MAC entity is in the active time of all the configured multicast DRXs, transmitting the at least one of the CSI, the semi-persistent CSI, the periodic SRS, and the semi-persistent SRS to the base station corresponding to the cell.

In addition, the method comprises determining in case that power saving-radio network temporary identifier monitoring is not configured for an active downlink bandwidth part, wherein, in case that the MAC entity is not in the active time of all the configured multicast DRXs corresponding to the DRX group considering at least one of a multicast assignment, a DRX command MAC control element (CE) and a long DRX command MAC CE for the multicast are received from the base station until 4 milliseconds prior to a current symbol when evaluating the active time of all the configured multicast DRXs corresponding to the DRX group, wherein, in response to determining that the MAC entity is in the active time of all the configured multicast DRXs corresponding to the DRX group, the UE transmits the at least one of the CSI, the semi-persistent CSI, the periodic SRS, and the semi-persistent SRS to the base station corresponding to the cell.

In addition, the method comprises determining in case that DRX on-duration timers of all the configured multicast DRXs corresponding to the DRX group are not running based on at least one of a multicast assignment, a DRX command MAC CE, and a long DRX command MAC CE for multicast received from the base station until 4 milliseconds prior to a current symbol when evaluating the active time of all the configured multicast DRXs corresponding to the DRX group, and in response to determining that the DRX on-duration timers of all the configured multicast DRXs corresponding to the DRX group are running, transmitting the at least one of the CSI, the semi-persistent CSI, the periodic SRS, and the semi-persistent SRS to the base station corresponding to the cell, wherein a CSI masking is configured by upper layers.

In addition, wherein the CSI is configured on a physical uplink control channel (PUCCH) in a DRX group in case that the CSI is transmitted to the base station.

In addition, wherein the semi-persistent CSI is configured on a physical uplink shared channel (PUSCH) in a DRX group in case that the semi-persistent CSI is transmitted to the base station.

In an another embodiment of this disclosure, A user equipment (LTE) in a wireless communication network, the LTE comprising: a transceiver; at least one processor; and wherein the at least one processor is configured to: determine that a multicast discontinuous reception (DRX) pertaining to at least one multicast service being received is configured in a cell, determine whether a medium access control (MAC) entity of the UE is in an active time of the configured multicast DRX, and transmit at least one of a channel state information (CSI), a semi-persistent CSI, a periodic sounding reference signal (SRS), and a semi-persistent SRS to a base station corresponding to the cell, in case that the MAC entity is in the active time of the configured multicast DRX.

In addition, wherein the processor is further configured to: determine in case that downlink control information with a cyclic redundancy check scrambled by a power saving-radio network temporary identifier monitoring is configured for an active downlink bandwidth part; determine in case that a current symbol occurs within a DRX on-duration timer duration, wherein a DRX on-duration timer associated with a current DRX cycle pertaining to the unicast DRX is not started; and determine, in case that the MAC entity is not in the active time of all the configured multicast DRXs considering at least one of a multicast assignment, a DRX command MAC control element (CE) and a long DRX command MAC CE for the multicast received from the base station until 4 milliseconds prior to the current symbol in case that evaluating the active time of all the configured multicast DRXs, wherein, in response to determining that the MAC entity is in the active time of all the configured multicast DRXs, transmit the at least one of the CSI, the semi-persistent CSI, the periodic SRS, and the semi-persistent SRS to the base station corresponding to the cell.

In addition, wherein the processor is further configured to: determine in case that power saving-radio network temporary identifier monitoring is not configured for an active downlink bandwidth part, wherein, in case that the MAC entity is not in the active time of all the configured multicast DRXs corresponding to the DRX group considering at least one of a multicast assignment, a DRX command MAC control element (CE) and a long DRX command MAC CE for the multicast are received from the base station until 4 milliseconds prior to a current symbol when evaluating the active time of all the configured multicast DRXs corresponding to the DRX group, wherein, in response to determining that the MAC entity is in the active time of all the configured multicast DRXs corresponding to the DRX group, the UE transmits the at least one of the CSI, the semi-persistent CSI, the periodic SRS, and the semi-persistent SRS to the base station corresponding to the cell.

In addition, wherein the processor is further configured to: determine in case that DRX on-duration timers of all the configured multicast DRXs corresponding to the DRX group are not running based on at least one of a multicast assignment, a DRX command MAC CE, and a long DRX command MAC CE for multicast received from the base station until 4 milliseconds prior to a current symbol when evaluating the active time of all the configured multicast DRXs corresponding to the DRX group, and in response to determining that the DRX on-duration timers of all the configured multicast DRXs corresponding to the DRX group are running, transmit the at least one of the CSI, the semi-persistent CSI, the periodic SRS, and the semi-persistent SRS to the base station corresponding to the cell, wherein a CSI masking is configured by upper layers.

In addition, wherein the CSI is configured on a physical uplink control channel (PUCCH) in a DRX group in case that the CSI is transmitted to the base station.

In addition, wherein the semi-persistent CSI is configured on a physical uplink shared channel (PUSCH) in a DRX group in case that the semi-persistent CSI is transmitted to the base station.

Embodiments herein provide a method and a LTE receiving a multicast service for reporting CSI/SRS signal information to a wireless communication network.

Embodiments herein ensure CSI/SRS measurement and/or CSI/SRS reporting when the LTE is receiving a new radio multicast broadcast service (NR MBS).

Embodiments herein provide a DRX approach and the CSI/SRS reporting in order to support link adaptation and/or resource allocation and ensure the reception performance of 5G MBS services.

While the disclosure has been particularly shown and described with reference to certain embodiments thereof, it will be understood by those of ordinary skill in the art that various changes in form and details may be made therein without departing from the spirit and scope of the disclosure as defined by the following claims and their equivalents.

## Claims

1. A method performed by a user equipment, UE, in a wireless communication network, the method comprising:
determining that a multicast discontinuous reception, DRX, pertaining to at least one multicast service is configured in a cell;
determining whether a medium access control, MAC, entity of the UE is in an active time of the configured multicast DRX; and
transmitting at least one of a channel state information, CSI, a semi-persistent CSI, a periodic sounding reference signal, SRS, and a semi-persistent SRS to a base station corresponding to the cell, in case that the MAC entity is in the active time of the configured multicast DRX.

2. The method of claim 1, further comprising:
determining in case that downlink control information with a cyclic redundancy check scrambled by a power saving-radio network temporary identifier monitoring is configured for an active downlink bandwidth part;
determining in case that a current symbol occurs within a DRX on-duration timer duration, wherein a DRX on-duration timer associated with a current DRX cycle pertaining to the unicast DRX is not started; and
determining, in case that the MAC entity is not in the active time of all the configured multicast DRXs considering at least one of a multicast assignment, a DRX command MAC control element, CE, and a long DRX command MAC CE for the multicast received from the base station until 4 milliseconds prior to the current symbol in case that evaluating the active time of all the configured multicast DRXs,
wherein, in response to determining that the MAC entity is in the active time of all the configured multicast DRXs, transmitting the at least one of the CSI, the semi-persistent CSI, the periodic SRS, and the semi-persistent SRS to the base station corresponding to the cell.

3. The method of claim 1, further comprising:
determining in case that power saving-radio network temporary identifier monitoring is not configured for an active downlink bandwidth part,
wherein, in case that the MAC entity is not in the active time of all the configured multicast DRXs corresponding to the DRX group considering at least one of a multicast assignment, a DRX command MAC control element, CE, and a long DRX command MAC CE for the multicast are received from the base station until 4 milliseconds prior to a current symbol when evaluating the active time of all the configured multicast DRXs corresponding to the DRX group,
wherein, in response to determining that the MAC entity is in the active time of all the configured multicast DRXs corresponding to the DRX group, the UE transmits the at least one of the CSI, the semi-persistent CSI, the periodic SRS, and the semi-persistent SRS to the base station corresponding to the cell.

4. The method of claim 1, further comprising:
determining in case that DRX on-duration timers of all the configured multicast DRXs corresponding to the DRX group are not running based on at least one of a multicast assignment, a DRX command MAC CE, and a long DRX command MAC CE for multicast received from the base station until 4 milliseconds prior to a current symbol when evaluating the active time of all the configured multicast DRXs corresponding to the DRX group, and
in response to determining that the DRX on-duration timers of all the configured multicast DRXs corresponding to the DRX group are running, transmitting the at least one of the CSI, the semi-persistent CSI, the periodic SRS, and the semi-persistent SRS to the base station corresponding to the cell,
wherein a CSI masking is configured by upper layers.

5. The method of claim 1, wherein
the CSI is configured on a physical uplink control channel, PUCCH, in a DRX group in case that the CSI is transmitted to the base station.

6. The method of claim 1, wherein
the semi-persistent CSI is configured on a physical uplink shared channel, PUSCH, in a DRX group in case that the semi-persistent CSI is transmitted to the base station.

7. A user equipment, UE, in a wireless communication network, the LTE comprising:
a transceiver;
at least one processor; and
wherein the at least one processor is configured to:
determine that a multicast discontinuous reception, DRX, pertaining to at least one multicast service being received is configured in a cell,
determine whether a medium access control, MAC, entity of the UE is in an active time of the configured multicast DRX, and
transmit at least one of a channel state information, CSI, a semi-persistent CSI, a periodic sounding reference signal, SRS, and a semi-persistent SRS to a base station corresponding to the cell, in case that the MAC entity is in the active time of the configured multicast DRX.

8. The LTE of claim 7, wherein the processor is further configured to:
determine in case that downlink control information with a cyclic redundancy check scrambled by a power saving-radio network temporary identifier monitoring is configured for an active downlink bandwidth part;
determine in case that a current symbol occurs within a DRX on-duration timer duration, wherein a DRX on-duration timer associated with a current DRX cycle pertaining to the unicast DRX is not started; and
determine, in case that the MAC entity is not in the active time of all the configured multicast DRXs considering at least one of a multicast assignment, a DRX command MAC control element, CE, and a long DRX command MAC CE for the multicast received from the base station until 4 milliseconds prior to the current symbol in case that evaluating the active time of all the configured multicast DRXs,
wherein, in response to determining that the MAC entity is in the active time of all the configured multicast DRXs, transmit the at least one of the CSI, the semi-persistent CSI, the periodic SRS, and the semi-persistent SRS to the base station corresponding to the cell.

9. The LTE of claim 7, wherein the processor is further configured to:
determine in case that power saving-radio network temporary identifier monitoring is not configured for an active downlink bandwidth part,
wherein, in case that the MAC entity is not in the active time of all the configured multicast DRXs corresponding to the DRX group considering at least one of a multicast assignment, a DRX command MAC control element, CE, and a long DRX command MAC CE for the multicast are received from the base station until 4 milliseconds prior to a current symbol when evaluating the active time of all the configured multicast DRXs corresponding to the DRX group,
wherein, in response to determining that the MAC entity is in the active time of all the configured multicast DRXs corresponding to the DRX group, the UE transmits the at least one of the CSI, the semi-persistent CSI, the periodic SRS, and the semi-persistent SRS to the base station corresponding to the cell.

10. The LTE of claim 7, wherein the processor is further configured to:
determine in case that DRX on-duration timers of all the configured multicast DRXs corresponding to the DRX group are not running based on at least one of a multicast assignment, a DRX command MAC CE, and a long DRX command MAC CE for multicast received from the base station until 4 milliseconds prior to a current symbol when evaluating the active time of all the configured multicast DRXs corresponding to the DRX group, and
in response to determining that the DRX on-duration timers of all the configured multicast DRXs corresponding to the DRX group are running, transmit the at least one of the CSI, the semi-persistent CSI, the periodic SRS, and the semi-persistent SRS to the base station corresponding to the cell,
wherein a CSI masking is configured by upper layers.

11. The LTE of claim 7, wherein the CSI is configured on a physical uplink control channel, PUCCH, in a DRX group in case that the CSI is transmitted to the base station.

12. The LTE of claim 7, wherein the semi-persistent CSI is configured on a physical uplink shared channel, PUSCH, in a DRX group in case that the semi-persistent CSI is transmitted to the base station.
